# EUROPÄISCHE PATENTSCHRIFT

(11) **EP 1 959 752 B1**
(45) Veröffentlichungstag und Bekanntmachung des Hinweises auf die Patenterteilung: **24.06.2009**
(21) Anmeldenummer: 06829258.0
(22) Anmeldetag: 04.12.2006
(51) Int. Cl.: A23L 1/00, A23L 1/0522, A21D 2/18, A23L 1/035

(54) **EINE EXTRUDIERTE ZUSAMMENSETZUNG**
AN EXTRUDED COMPOSITION
COMPOSITION EXTRUDABLE

(30) Priorität: 13.12.2005 DE 102005059406
(43) Veröffentlichungstag der Anmeldung: 27.08.2008
(73) Patentinhaber: Cognis IP Management GmbH, 40589 Düsseldorf (DE)
(72) Erfinder: HORLACHER, Peter, 89287 Bellenberg (DE); GÖLITZ, Hartmut, 87787 Wolfertschwenden (DE); FUNKE, Andreas, 89165 Dietenheim (DE); ADAMS, Wolfgang, 88074 Meckenbeuren (DE); KIELMEYER, Friedrich, 89257 Illertissen (DE); TRALLES, Ingo, 89257 Illertissen (DE)
(86) Internationale Anmeldenummer: PCT/EP2006/011601
(87) Internationale Veröffentlichungsnummer: WO 2007/076911

(56) Entgegenhaltungen:
- EP-A1- 0 153 870
- EP-A1- 0 650 669
- WO-A-02/34052
- US-A- 3 924 018
- US-A- 5 505 982

## Beschreibung

### Gebiet der Erfindung

Die Erfindung betrifft ein Extrusionsverfahren zur Herstellung von emulgatorhaltigen Grundstoffen für Nahrungsmittel.

### Stand der Technik

Bei der Herstellung von Lebensmitteln werden heutzutage oftmals Mischungen von Lebensmittelzusatzstoffen verwendet, die meist als Halbfabrikate einem anderen Stoffgemisch zugeführt und dann weiterverarbeitet werden. Derartige Zusammensetzungen erleichtern die Arbeit und führen zu einer höheren Produktionssicherheit, da die jeweiligen Wiege- und Mischarbeiten entfallen. Häufig resultieren bei der Herstellung dieser Vorprodukte Stoffgemische, die sich trotz gleicher chemischer Zusammensetzung in der Weiterverarbeitung sehr unterschiedlich verhalten, je nachdem durch welches Verfahren sie hergestellt worden sind. So haben nicht nur die chemische Zusammensetzung und bestimmte physikalisch-chemische Eigenschaften, sondern auch durch die Herstellung einen wesentlichen Einfluss auf das Verhalten der Endformulierungen, in denen diese Vormischungen eingesetzt werden.

Im Europäischen Patent EP 0 153 870 B1 werden Zubereitungen beschrieben, die frei fließende Pulver eines Trägers mit einer lipophilen oberflächenaktiven Substanz darstellen und vorzugsweise zur Herstellung von Backzubereitungen eingesetzt werden. Die lipophile oberflächenaktive Substanz erfährt durch die Verarbeitung mit einem Träger eine wesentlich bessere Benetzbarkeit. Eine Zusammensetzung, die üblicherweise durch Sprühtrocknung hergestellt wurde, wurde hier erstmalig durch ein ökonomischeres einfacheres Extrusionsverfahren erzeugt und zeichnete sich durch ein verbessertes Verhalten der nachfolgend damit hergestellten Backteige aus.

In einem sogenannten "Whipping-Test", bei dem der Teig aufgeschlagen wird und möglichst viel Luft stabil eingearbeitet werden soll, um nach dem Backvorgang ein leichtes lockeres Produkt zu bekommen, zeigte das erfindungsgemäße Produkt gegenüber den herkömmlichen Produkten deutliche Vorteile.

Dennoch besteht der Bedarf, die Eigenschaften emulgatorhaltiger Vorprodukte für die Lebensmittel- und insbesondere Backprodukteherstellung zu verbessern. Der Herstellungsprozess soll einfach vollzogen werden können. Die extrudierten oberflächenaktiven Substanzen sollen verbesserte Eigenschaften hinsichtlich ihrer Aufschäumungskapazität und -stabilität aufweisen, die sich in den damit produzierten Endprodukten positiv auswirken soll.

### Beschreibung der Erfindung

Gegenstand der Erfindung ist ein Verfahren zur Herstellung extrudierter oberflächenaktiver Substanzen, bei dem man einen Träger durch Zugabe hydrophiler Emulgatoren hydrophilisiert und erst nachfolgend in einem weiteren Schritt die zu extrudierenden oberflächenaktiven Substanzen zufügt. Genauer gesagt ist Gegenstand der vorliegenden Erfindung Ein Verfahren zur Extrusion einer Zusammensetzung, wobei die Zusammensetzung mindestens eine oberflächenaktive Substanz und mindestens einen hydrophilisierten Träger umfasst, und wobei das Verfahren umfasst
a) das Bereitstellen eines Trägers,
b) die Hydrophilisierung dieses Trägers durch Zugabe mindestens eines hydrophilen Emulgators zu dem Träger, so dass der hydrophilisierte Träger erhalten wird,
c) das Hinzufügen mindestens einer oberflächenaktiven Substanz zu dem hydrophilisierten Träger, so dass die Zusammensetzung umfassend mindestens eine oberflächenaktive Substanz und den hydrophilisierten Träger erhalten wird, und
d) die Extrusion dieser Zusammensetzung,
wobei das Hinzufügen der oberflächenaktiven Substanz zu dem hydrophilisierten Träger nach der Zugabe der hydrophilen Emulgatoren zu dem Träger erfolgt.

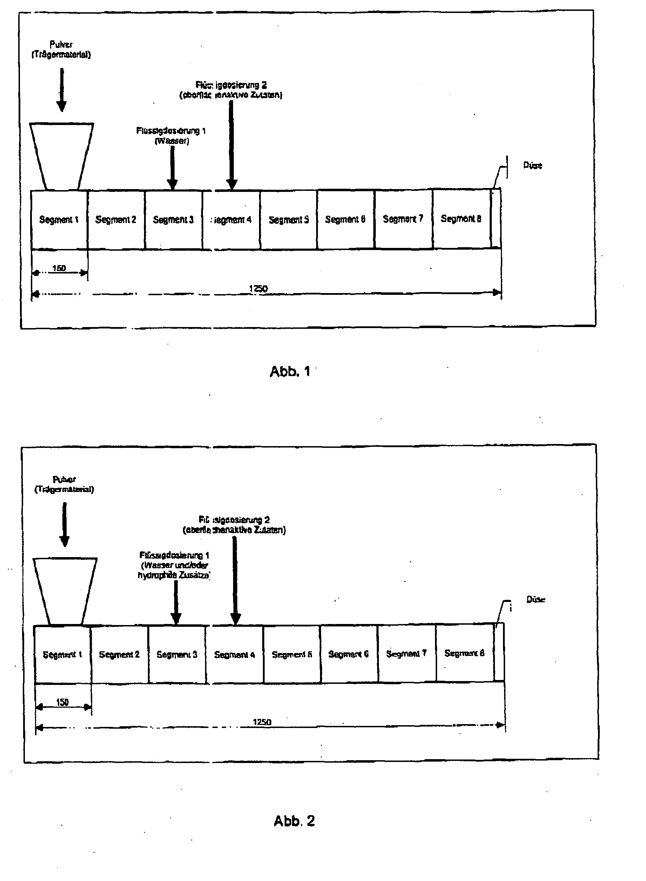

Dieses lässt sich insbesondere durch zwei unterschiedliche Verfahrensdurchführungen erreichen. Entweder kann der Träger vor Beginn der Extrusion mit den hydrophilen Emulgatoren gemischt werden und das Gemisch dem Extruder zugeführt werden (z. B. gemäß Fig. 1). Oder man fügt dem Träger im Extruder hydrophile Emulgatoren zu und ergänzt erst nachfolgend im weiteren Extrusionsprozess die zu extrudierenden oberflächenaktiven Substanzen (z. B. gemäß Fig. 2). Bevorzugt ist es, dass es nicht zu einem intensiven Kontakt der hydrophilen Emulgatoren mit der oberflächenaktiven Substanz kommt und dass die hydrophilen Emulgatoren vor Zugabe der weiteren oberflächenaktiven Substanz zur Hydrophilisierung des Trägers zur Verfügung steht.
Fig. 1 stellt eine mögliche Konfiguration des Extrusionsprozesses dar. Der in Kammer 1 dosierte Träger kann hier bei dem erfindungsgemäßen Verfahren bereits mit dem hydrophilisierten Material erfolgen (Methode 1)
Fig. 2 stellt eine mögliche Konfiguration des Extrusionsprozesses dar. Der Träger wird hier erst durch die Dosierung in Kammer 3 hydrophilisiert (erfindungsgemäße Methode 2).

Überraschenderweise wurde gefunden, dass die nach dem erfindungsgemäßen Verfahren erhältlichen extrudierten Vorprodukte oberflächenaktiver Substanzen nicht nur eine sehr gute Lagerstabilität, Benetzbarkeit und Rieselfähigkeit aufweisen, sondern insbesondere bei den anwendungstechnischen Eigenschaften wie Aufschäumungskapazität und -stabilität in der Masse, verbesserte Eigenschaften als vergleichbare pulverförmige Produkte des Handels zeigen. Die vorherige Hydrophilisierung führt zu einer modifizierten Struktur bzw. zu einer modifizierten Einlagerung der oberflächenaktiven Substanzen und damit zu einer verbesserten Verfügbarkeit der oberflächenaktiven Substanz, die wiederum den Aufschäumungsprozess bei der Masseherstellung entscheidend beeinflusst und in Backwaren mit einer lockeren und stabileren Struktur resultiert.

Das Herstellverfahren beinhaltet zwar einen weiteren Schritt, dieser verkompliziert jedoch nicht die Produktion und kann bei der zweiten Variante der Verfahrensdurchführung immer noch als "Eintopfverfahren" durchgeführt werden. Die bei den Versuchsdurchführungen ermittelten Ergebnisse zeigten, dass der Extrusionsprozess zu sehr konstanten Ergebnissen führte.

### Trägersubstanzen

Die erfindungsgemäßen Trägersubstanzen, die für das Extrudat oberflächenaktiver Substanzen geeignet sind, sind die üblichen in der Lebensmittelindustrie eingesetzten Hauptkomponenten oder Füllstoffe. Dazu zählen hauptsächlich Substanzen wie die für die Backprodukteherstellung verwendeten Mehle oder Stärken (Beispiele sind: Weizenstärke, Maisstärke, Reisstärke, Kartoffelstärke), modifizierte Stärken, Cellulose oder Cellulosederivate sowie weitere Kohlenhydrate wie beispielsweise Saccharose, Glucose, Fructose, Lactose, Dextrine, Maltodextrine, auch Zuckeralkohole oder Malzstoffe (zum Beispiel:. Malzmehle, Malzextrakte), Hefenahrung, Sojaerzeugnisse wie Sojamehle, Sojaproteine, Verdickungsmittel und Hydrokolloide (dazu zählen: Guarkernmehl, Getreidequellmehle, Johannisbrotkernmehl, Xanthan, Alginat), Milcherzeugnisse wie Magermilchpulver, Vollmilchpulver, Molkenpulver, Caseine, sowie deren Mischungen, wobei die Aufzählung nicht begrenzend sein soll.

Für die Backprodukteherstellung werden bevorzugt Stärken und Mehle eingesetzt.

### Hydrophile Emulgatoren - Hydrophilisierungsmittel

Geeignete Emulgatoren, die als Hydrophilisierungsmittel für den Träger eingesetzt werden können, setzt man bevorzugt in Mengen von 0,03 bis 10 Gew. %, vorzugsweise 0,1 bis 5 Gew. % bezogen auf das Gewicht des Extrudats ein.

Grundsätzlich soll das Hydrophilisierungsmittel bevorzugt einen HLB-Wert größer 8 aufweisen, vorzugsweise größer 8.

Dazu zählen insbesondere
(a) Sorbitanester
(b) Polysorbate, also Anlagerungsprodukte von 1 bis 20 Mol Ethylenoxid an Sorbitanmono-, -sesqui-, -di-, und/oder -triester auf Basis von Fettsäuren mit 6 bis 22, vorzugsweise 12 bis 18 Kohlenstoffatomen, wie beispielsweise Addukte von 5 bis 15 Mol Ethylenoxid an Sorbitanmonolaurat, Sorbitandipalmitat, Sorbitantristearat, Sorbitanmonooleat und dergleichen;
(c) Zuckerester wie Saccharoseester z. B. Saccharosemonopalmitat und -stearat
(d) Fettsäuren und deren Salze oder ähnliches
(e) Teilester von Glycerin mit essbaren Fettsäuren kondensiert mit etwa 1 bis 40 mol Ethylenoxid

### Oberflächenaktive Substanzen

Die oberflächenaktiven Substanzen, die zu Extrudaten für die Lebensmittelherstellung verarbeitet werden, unterscheiden sich von dem Hydrophilisierungsmittel (hydrophiler Emulgator) vorzugsweise hinsichtlich niedrigerer HLB-Werte.

Zu den üblichen in der Lebensmittelherstellung verwendeten oberflächenaktiven Substanzen zählen insbesondere (alleine und in Kombination):
(a) Polyolester,
(b) Polyhydrole,
(c) Mono- und Diglyceride sowie deren technische Gemische auf Basis von Fettsäuren mit 6 bis 22, vorzugsweise 12 bis 18 Kohlenstoffatomen, wie beispielsweise Laurinsäuremonoglycerid, Palmitinsäuremonoglycerid, Sterarinsäuremonoglycerid oder Ölsäuremonoglycerid,
(d) Lecithine,
(e) Propylenglycolester,
(f) veresterte Monoglyceride (Acetems, Lactams).

### Extrusion, wie sie in einer bevorzugten Ausführungsform der vorliegenden Erfindung durchgeführt werden kann

In einem Extruder, auch "Schneckenpresse" genannt, werden trockene oder pastöse Materialien durch eine sich drehende Schnecke vorwärts transportiert, dabei gemischt, zerkleinert, komprimiert und plastifiziert und durch ein Endstück gepresst. Die mehr oder weniger trockenen Ausgangsstoffe werden über gravimetrische oder volumetrische Dosiervorrichtungen das Hauptwerk des Extruders geführt: In diesem Verfahrensteil drehen sich ein bis zwei Schnecken in einem Hohlzylinder. Über die Schneckendrehzahl kann auch die DosierungBeschickung des Kompaktors beeinflusst werden.

Je nach zugeführter Scherenergie vermengt und erhitzt die Schnecke die Stoffe stärker oder weniger stark (durch mechanische Scherung und Reibung). So entsteht eine pumpfähige Masse, die durch eine Düse gepresst und fein zerstäubt wird.

Die Extrusion wird vorzugsweise bei 50 bis 150°C, vorzugsweise bei 130 °C Düsentemperatur durchgeführt.

Die Vorteile der Erfindung kommen dadurch zum Ausdruck, dass die Trägermaterialien vor Zugabe der beschriebenen oberflächenaktiven Substanzen mit dem Hydrophilisierungsmittel versetzt werden. Dies kann in einem separaten, vorgelagerten Prozessschritt erfolgen oder in den Extrusionsprozeß integriert werden. In jedem Fall muss die Hydrophilisierung vor Zugabe der oberflächenaktiven Substanzen erfolgen.

### Besondere Ausführungsformen der vorliegenden Erfindung

Neben den Ausführungsformen, die Gegenstand der Patentansprüche sind, sind auch die folgenden Ausführungsformen Gegenstand der vorliegenden Erfindung:
1. Ein Verfahren zur Extrusion einer Zusammensetzung, wobei die Zusammensetzung mindestens eine oberflächenaktive Substanz und mindestens einen hydrophilisierten Träger umfasst, und wobei das Verfahren umfasst
   a) das Bereitstellen eines Trägers,
   b) die Hydrophilisierung dieses Trägers durch Zugabe mindestens eines hydrophilen Emulgators zu dem Träger, so dass der hydrophilisierte Träger erhalten wird,
   c) das Hinzufügen mindestens einer oberflächenaktiven Substanz zu dem hydrophilisierten Träger, so dass die Zusammensetzung umfassend mindestens eine oberflächenaktive Substanz und den hydrophilisierten Träger erhalten wird, und
   d) die Extrusion dieser Zusammensetzung,
   wobei das Hinzufügen der oberflächenaktiven Substanz zu dem hydrophilisierten Träger nach der Zugabe der hydrophilen Emulgatoren zu dem Träger erfolgt.
2. Das Verfahren nach Ausführungsform Nr. 1, **dadurch gekennzeichnet, dass** man den Träger mit dem oder den hydrophilen Emulgatoren mischt und das Gemisch dem Extruder zuführt.
3. Das Verfahren nach Ausführungsform Nr. 1, **dadurch gekennzeichnet, dass** man dem Träger während der Extrusion hydrophile Emulgatoren zufügt und erst nachfolgend im weiteren Extrusionsprozess die zu extrudierenden oberflächenaktiven Substanzen zufügt.
4. Das Verfahren nach einer der Ausführungsformen Nr. 1 bis 3, **dadurch gekennzeichnet, dass** man als Träger Substanzen ausgewählt aus der Gruppe der Stärken, der modifizierten Stärken, Zucker, Kohlenhydrate, Proteine und Mehl einsetzt.
5. Das Verfahren nach einer der Ausführungsformen Nr. 1 bis 4, **dadurch gekennzeichnet, dass** man die oberflächenaktiven zu extrudierenden Substanzen ausgewählt aus der Gruppe, die gebildet wird von Mono-und Diglyceride, Polyolester,Propylenglycolester, Acetems, Lactems, Datems, Citrems
6. Das Verfahren nach einer der Ausführungsformen Nr. 1 bis 5, **dadurch gekennzeichnet, dass** man zur Hydrophilisierung des Trägers hydrophile Emulgatoren mit einem HLB-Wert größer 8, vorzugsweise größer 12, einsetzt.
7. Das Verfahren nach einer der Ausführungsformen Nr. 1 bis 6, **dadurch gekennzeichnet, dass** man zur Hydrophilisierung des Trägers Teilester eines Sorbits mit essbaren Fettsäuren kondensiert mit etwa 20 mol Ethylenoxid (Polysorbat, Polyoxuethylen-(20)-Sorbitan-Monooleat) einsetzt.
8. Das Verfahren nach einer der Ausführungsformen Nr. 1 bis 6, **dadurch gekennzeichnet, dass** man zur Hydrophilisierung des Trägers Salze der Fettsäuren einsetzt
9. Das Verfahren nach einer der Ausführungsformen Nr. 1 bis 6, **dadurch gekennzeichnet, dass** man zur Hydrophilisierung des Trägers Teilester von Glycerin mit essbaren Fettsäuren kondensiert mit etwa 1- 40 mol Ethylenoxid einsetzt
10. Das Verfahren nach einer der Ausführungsformen Nr. 1 bis 9, **dadurch gekennzeichnet, dass** man zur Hydrophilisierung des Trägers hydrophile Emulgatoren in Mengen von 0,03 bis 10 Gew. % bezogen auf die Trockenmasse des Trägers einsetzt.
11. Das Verfahren nach einer der Ausführungsformen Nr. 1 bis 10, **dadurch gekennzeichnet, dass** man die Extrusion bei Temperaturen im Bereich von 50 bis 150°C durchführt
12. Extrudierte oberflächenaktive Substanzen hergestellt nach dem Verfahren nach einer der Ausführungsformen Nr. 1 bis 11.
13. Verwendung der Substanzen gemäß der Ausführungsform Nr. 12 zur Herstellung von geschäumten Nahrungsmitteln.
14. Verwendung der Substanzen gemäß der Ausführungsform Nr. 12 zur Herstellung von Backwaren
15. Verwendung der Substanzen gemäß der Ausführungsform Nr. 12 zur Herstellung von Desserts
16. Verwendung der Substanzen gemäß der Ausführungsform Nr. 12 zur Herstellung von Eiscreme
17. Verwendung der Substanzen gemäß der Ausführungsform Nr. 12 zur Herstellung von Süßwaren
18. Verwendung der Substanzen gemäß der Ausführungsform Nr. 12 zur Herstellung von Emulsionen

### Extrusionsprozess:

Extruder: Zweischneckenextruder von Werner & Pfleiderer, Typ ZSK 40, gravimetrisches Dosiersystem von Brabender.

**Tabelle 1**

| **Schneckenkonfiguration für W&P ZSK 40** | | | |
|---|---|---|---|
| Element | Task | Length mm | |
| helix angle / length [mm] | | | |
| 25/25 | filling | 25 | |
| 25/25 | | 50 | |
| 40/10 | | 60 | Starch |
| disk/1 | | 61 | Starch |
| 60/60 | | 121 | Starch |
| 60/60 | | 181 | Starch |
| 988/30 | | 211 | Starch |
| 40/40 | | 251 | Starch |
| 40/40 | | 291 | Starch |
| 40/40 | | 331 | Starch |
| 40/40 | | 371 | Starch |
| 40/20 | filling | 391 | Starch + Water/Solution |
| 40/40 | | 431 | Starch + Water/Solution |
| KB 45/5/40 | mixing | 471 | Starch + Water/Solution |
| 40/40 | | 511 | Starch + Water/Solution |
| KB 45/5/20 | | 531 | Starch + Water/Solution |
| 40/40 | transport | 571 | Starch + Water/Solution |
| disk/1 | | 572 | Starch + Water/Solution |
| disk/1 | | 573 | Starch + Water/Solution |
| 60/60 | filling | 633 | Starch + Water/Solution + Emulsifier |
| disk/1 | transport | 634 | Starch + Water/Solution + Emulsifier |
| 40/40 | | 674 | Starch + Water/Solution + Emulsifier |
| 40/10 | | 684 | Starch + Water/Solution + Emulsifier |
| KB 45/5/20 | mixing, transport | 704 | Starch + Water/Solution + Emulsifier |
| KB 45/5/20 | | 724 | Starch + Water/Solution + Emulsifier |
| 40/40 | | 764 | Starch + Water/Solution + Emulsifier |
| 40/10 | | 774 | Starch + Water/Solution + Emulsifier |
| 40/10 | | 784 | Starch + Water/Solution + Emulsifier |
| KB 45/5/40 | | 824 | Starch + Water/Solution + Emulsifier |
| 40/10 | | 834 | Starch + Water/Solution + Emulsifier |
| 40/10 | | 844 | Starch + Water/Solution + Emulsifier |
| 40/20 | | 864 | Starch + Water/Solution + Emulsifier |
| 40/10 | | 874 | Starch + Water/Solution + Emulsifier |
| 40/10 | | 884 | Starch + Water/Solution + Emulsifier |
| KB 90/5/40 | mixing | 924 | Starch + Water/Solution + Emulsifier |
| 40/40 | transport and compression | 964 | Starch + Water/Solution + Emulsifier |
| 40/40 | | 1004 | Starch + Water/Solution + Emulsifier |
| 40/40 | | 1044 | Starch + Water/Solution + Emulsifier |
| 25/25 | | 1069 | Starch + Water/Solution + Emulsifier |
| 25/25 | | 1094 | Starch + Water/Solution + Emulsifier |
| 40/10 | | 1104 | Starch + Water/Solution + Emulsifier |
| 40/10 | | 1114 | Starch + Water/Solution + Emulsifier |
| E 40/80 | | 1194 | Starch + Water/Solution + Emulsifier |

- Pulverdosierung:: 21 kg/h Segment 1
- Oberflächenaktive Substanzen:: Mischung eines Polyglycerolesters von Fettsäuren (FDA-CFR-No. 172.854, EEC-No. 475: Polymuls) und Mono- and diglyceride of edible fatty acids (EEC-No. E 471: Monomuls 90-35)
- Dosierung:: 8,9 kg/h in Segment 4
- Wasserdosierung:: 0,9 kg/h (+ 0,4 kg/h hydrophile Zusätze) in Segment 3
- Düsenplatte:: 4 X 1mm
- Schneckenumdrehungszahl:: 200 rpm
- Temperaturen:: Segment 1 - Raumtemperatur; Segment 2 - 7: 80°C; Segment 8: 130°C

### Beispiel 1:

Eine native Stärke (Remy DR, Remy Industries, Belgium) wurde mit 5 Gew.-ö% eines pulverförmigen hydrophilen Emulgators (Kaliumstearat, LIGA Kaliumstearat V pflanzlich, Peter Greven Fett-Chemie GmbH & Co. KG, Germany) gemischt und im oben beschriebenen Extrusionsprozess eingesetzt.

Als Vergleichsversuch diente das Verfahren ohne Zusatz des hydrophilen, pulverförmigen Emulgators (entsprechend dem von Nexus beschriebenen Verfahren).

### Beispiel 2:

Hier wurden hydrophile Emulgatoren bestehend aus einer Mischung von 50% TWEEN 20 und 50% TWEEN 80 zu 31,25% im Wasser gelöst und zwischen der Dosierung der Stärke (entsprechend Beispiel 1) und vor dem Zusatz der oberflächenaktiven Substanzen dem Extrusionsprozess zugesetzt.

Als Vergleichsversuch diente das Verfahren ohne Zusatz der hydrophilen Emulgatoren in der Wasserphase (entsprechend dem von Nexus beschriebenen Verfahren).

### Anwendungstest "Whipping Test":

| Zusammensetzung des Teigs: | |
|---|---|
| Weizenmehl (Typ 405) | 152 g (60%) |
| Weizenstärke | 102 g (40%) |
| Rohrzucker | 208 g (82%)¹ |
| Backpulver (Standard "Eisella") | 1 0 g (4%)¹ |
| Extrudierter Emulgator | 28 g (11%)¹ |
| Ei | 250 g (100%)¹ |
| Wasser | 100 g (40%)¹ |

| | |
|---|---|
| ¹bezogen auf Mehl, Stärke als 100% | |

Alle Zutaten wurden bei Raumtemperatur gemischt und in einem Hobart N50G 2 min 45 s auf Stufe 3 und 30 s auf Stufe 2; sowie in einem Hobart A200 6 min auf Stufe 3 und 30 s auf Stufe 2 aufgeschlagen. Die Dichte der erhaltenen Masse wurde bestimmt. Die erhaltenen Werte sind im Folgenden wiedergegeben.

### Zu Beispiel 1

a) Massendichte mit Emulgator auf Basis nativer Stärke (entspricht Nexus Verfahren): 520 g/l
b) Massendichte mit Emulgator auf Basis nativer Stärkegemischt mit Kaliumstearat: 320 g/l
c) Massendichte mit handelsüblichen extrudierten Emulgator (nach EP 0 153 870 Nexus), Emulpals 106 Batch-No. 2909388: 384 g/l

### Zu Beispiel 2

a) Massendichte mit Emulgator auf Basis nativer Stärke (entspricht Nexus Verfahren): 520 g/l
b) Massendichte mit Emulgator auf Basis nativer Stärke und hydrophilen Zusätzen im Wasser: 336 g/l
c) Massendichte mit handelsüblichen extrudierten Emulgator (nach EP 0 153 870 Nexus), Emulpals 106 Batch-No. 2909388: 384 g/l

## Patentansprüche

1. Ein Verfahren zur Extrusion einer Zusammensetzung, wobei die Zusammensetzung mindestens eine oberflächenaktive Substanz und mindestens einen hydrophilisierten Träger umfasst, und wobei das Verfahren umfasst
a) das Bereitstellen eines Trägers,
b) die Hydrophilisierung dieses Trägers durch Zugabe mindestens eines hydrophilen Emulgators zu dem Träger, so dass der hydrophilisierte Träger erhalten wird,
c) das Hinzufügen mindestens einer oberflächenaktiven Substanz zu dem hydrophilisierten Träger, so dass die Zusammensetzung umfassend mindestens eine oberflächenaktive Substanz und den hydrophilisierten Träger erhalten wird, und
d) die Extrusion dieser Zusammensetzung,
wobei das Hinzufügen der oberflächenaktiven Substanz zu dem hydrophilisierten Träger nach der Zugabe der hydrophilen Emulgatoren zu dem Träger erfolgt.

2. Das Verfahren nach Anspruch 1, **dadurch gekennzeichnet, dass** man den Träger mit dem oder den hydrophilen Emulgatoren mischt und das Gemisch dem Extruder zuführt.

3. Das Verfahren nach Anspruch 1, **dadurch gekennzeichnet, dass** man dem Träger während der Extrusion hydrophile Emulgatoren zufügt und erst nachfolgend im weiteren Extrusionsprozess die zu extrudierenden oberflächenaktiven Substanzen zufügt.

4. Das Verfahren nach einem der Ansprüche 1 bis 3, **dadurch gekennzeichnet, dass** man als Träger Substanzen ausgewählt aus der Gruppe der Stärken, der modifizierten Stärken, Zucker, Kohlenhydrate, Proteine und Mehl einsetzt.

5. Das Verfahren nach einem der Ansprüche 1 bis 4, **dadurch gekennzeichnet, dass** man als hydrophile Emulgatoren zur Hydrophilisierung des Trägers Substanzen ausgewählt aus der Gruppe der Sorbitanester, derethoxylierten Sorbitanester, der Zuckerester, der Polyolester einsetzt.

6. Das Verfahren nach einem der Ansprüche 1 bis 5, **dadurch gekennzeichnet, dass** man zur Hydrophilisierung des Trägers hydrophile Emulgatoren mit einem HLB-Wert von größer als 5 einsetzt.

7. Das Verfahren nach einem der Ansprüche 1 bis 6, **dadurch gekennzeichnet, dass** man zur Hydrophilisierung des Trägers hydrophile Emulgatoren in Mengen von 0,03 bis 10 Gew.-% bezogen auf das Gewicht des Trägers einsetzt.

8. Das Verfahren nach einem der Ansprüche 1 bis 7, **dadurch gekennzeichnet, dass** man die Extrusion bei Temperaturen im Bereich von 50 bis 150°C durchführt

9. Eine extrudierte Zusammensetzung, erhältlich nach dem Verfahren gemäß einem der Ansprüche 1 bis 8.

10. Die Verwendung der Zusammensetzung gemäß Anspruch 9 zur Herstellung von Backprodukten.

## Claims

1. A process for the extrusion of a composition containing at least one surface-active substance and at least one hydrophilicized carrier, **characterized in that** it comprises the steps of
a) supplying a carrier,
b) hydrophilicizing the carrier by addition of at least one hydrophilic emulsifier to the carrier so that the hydrophilicized carrier is obtained,
c) adding at least one surface-active substance to the hydrophilicized carrier so that the composition containing at least one surface-active substance and the hydrophilicized carrier is obtained and
d) extruding the composition,
the surface-active substance being added to the hydrophilicized carrier after addition of the hydrophilic emulsifiers to the carrier.

2. A process as claimed in claim 1, **characterized in that** the carrier is mixed with the hydrophilic emulsifier(s) and the resulting mixture is fed to the extruder.

3. A process as claimed in claim 1, **characterized in that** hydrophilic emulsifiers are added to the carrier during extrusion and the surface-active substances to be extruded are added afterwards as extrusion continues.

4. A process as claimed in any of claims 1 to 3, **characterized in that** substances selected from the group consisting of starches, modified starches, sugars, carbohydrates, proteins and flour are used as carriers.

5. A process as claimed in any of claims 1 to 4, **characterized in that** substances selected from the group consisting of sorbitan esters, ethoxylated sorbitan esters, sugar esters and polyol esters are used as the hydrophilic emulsifiers for hydrophilicizing the carrier.

6. A process as claimed in any of claims 1 to 5, **characterized in that** hydrophilic emulsifiers having an HLB value above 5 are used for hydrophilicizing the carrier.

7. A process as claimed in any of claims 1 to 6, **characterized in that** hydrophilic emulsifiers are used in quantities of 0.03 to 10% by weight, based on the weight of the carrier, for hydrophilicizing the carrier.

8. A process as claimed in any of claims 1 to 7, **characterized in that** extrusion is carried out at temperatures of 50 to 150°C.

9. An extruded composition obtainable by the process claimed in any of claims 1 to 8.

10. The use of the composition claimed in claim 9 for the production of confectionery.

## Revendications

1. Procédé pour l'extrusion d'une composition, la composition comprenant au moins une substance tensioactive et au moins un support rendu hydrophile, et le procédé comprenant
a) la fourniture d'un support,
b) l'hydrophilisation de cet support par addition au support d'au moins un émulsifiant hydrophile, de manière à obtenir le support rendu hydrophile,
c) l'addition d'au moins une substance tensioactive au support rendu hydrophile, de manière à obtenir la composition comprenant au moins une substance tensioactive et le support rendu hydrophile, et
d) l'extrusion de cette composition,
l'addition de la substance tensioactive au support rendu hydrophile s'effectuant après l'addition des émulsifiants hydrophiles au support.

2. Procédé selon la revendication 1, **caractérisé en ce qu'**on mélange le support avec l'émulsifiant hydrophile ou les émulsifiants hydrophiles et on envoie le mélange à l'extrudeuse.

3. Procédé selon la revendication 1, **caractérisé en ce qu'**on ajoute des émulsifiants hydrophiles au support pendant l'extrusion et ce n'est qu'ensuite, dans le processus d'extrusion ultérieur, qu'on ajoute les substances tensioactives à extruder.

4. Procédé selon l'une quelconque des revendications 1 à 3, **caractérisé en ce qu'**on utilise comme support des substances choisies dans le groupe constitué par les amidons, les amidons modifiés, les sucres, les glucides, les protéines et la farine.

5. Procédé selon l'une quelconque des revendications 1 à 4, **caractérisé en ce qu'**on utilise comme émulsifiants hydrophiles, destinés à rendre hydrophile le support, des substances choisies dans le groupe des esters de sorbitanne, des esters de sorbitanne éthoxylés, des esters de sucres, des esters de polyols.

6. Procédé selon l'une quelconque des revendications 1 à 5, **caractérisé en ce que** pour l'hydrophilisation du support on utilise des émulsifiants hydrophiles ayant un indice HLB (équilibre hydrophile-lipophile) de plus de 5.

7. Procédé selon l'une quelconque des revendications 1 à 6, **caractérisé en ce que** pour l'hydrophilisation du support on utilise des émulsifiants hydrophiles en quantités de 0,03 à 10 % en poids, par rapport au poids du support.

8. Procédé selon l'une quelconque des revendications 1 à 7, **caractérisé en ce qu'**on effectue l'extrusion à des températures dans la plage de 50 à 150 °C.

9. Composition extrudée, pouvant être obtenue conformément au procédé selon l'une quelconque des revendications 1 à 8.

10. Utilisation de la composition selon la revendication 9, pour la fabrication de pâtisseries.
